# EUROPEAN PATENT SPECIFICATION

(11) **EP 3 914 776 B1**
(45) Date of publication and mention of the grant of the patent: **22.11.2023**
(21) Application number: 20711632.8
(22) Date of filing: 20.01.2020
(51) Int. Cl.: E01H 5/02, E01H 1/12, E01H 5/04, B60B 39/12

(54) **MATERIAL RELOCATION DEVICE**
MATERIALUMLAGERUNGSVORRICHTUNG
DISPOSITIF DE DÉPLACEMENT DE MATÉRIAUX

(30) Priority: 24.01.2019 FI 20195043
(43) Date of publication of application: 01.12.2021
(73) Proprietor: Shorever Oy, 01720 Vantaa (FI)
(72) Inventor: JAVANAINEN, Tommi, 02180 Espoo (FI)
(74) Representative: Hovinen, Jari Juhani
(86) International application number: PCT/FI2020/050031
(87) International publication number: WO 2020/152397

(56) References cited:
- CN-A- 106 812 106
- RU-U1- 177 240
- US-A- 3 784 245
- US-A- 4 669 206
- US-A- 5 593 198

## Description

### FIELD OF THE INVENTION

The invention relates to the field of machine construction technology and implement technology.

### BACKGROUND OF THE INVENTION

Conventional tools such as shovels, snow pushers and various types of snow drivers do not enable snow/ground materials to be moved from beneath a passenger car which has become stuck due to a heavy fall of snow for example, and in some cases from in front of the wheels. The abovementioned implements generally do not fit beneath the car; in this case the danger is that the implement will get caught in structures, and the implement or the car will be damaged. Another problem is that the snow or other material slides off the implement when the latter is pulled. Thus these implements are not suitable for the removal of snow, or in some cases fine sand or another ground material, from a confined space beneath a vehicle. Moreover, the conventional implements mentioned above do not enable materials to be moved quickly and effectively in such a way that the materials are taken onto a relocation device with a movement directed towards a user too, and immediately moved away with a movement in the opposite direction for example.

### BRIEF DESCRIPTION OF THE INVENTION

An object of the invention is an implement for the relocation of materials which enables materials to be relocated with both forward and backward movements of the implement in an energy-efficient manner. This is achieved using a material relocation device in accordance with claim 1.

The description also relates to a method for the relocation of materials. A turning flap structure connected to a relocation base of a relocation device is used in the method to relocate materials towards a user and away from the user, the turning flap structure turning according to movement directions in such a way that the flap structure turns and allows the materials onto the relocation base when the relocation device is moved in a first movement direction, the flap structure closes and holds the materials on the relocation base when the relocation device is moved in a second relocation direction, and the materials are released from the relocation base when the relocation device is moved from the relocation direction to the first movement direction.

The invention is based on the material relocation structure connected to the material relocation base for the forward relocation of materials and backward relocation of materials, making use of the turning flap structure which is turnable according to the movement direction of material relocation, and the flap structure is also fastenable in a desired position thereof.

An advantage of the invention is in particular the fact that the material relocation device according to the invention is also suited for use in situations in which traditional relocation devices perform inadequately, when the objective is for example to remove snow from beneath a vehicle that has become stuck. The relocation device according to the invention may also be used to remove snow for example from a vehicle's surroundings, a roadway or a yard, in a novel and efficient manner.

US 3784245 A discloses a shovel for digging out snowbound vehicles on roads covered by snowdrifts.

US 5593198 A discloses a snow scoop which is sliding along the ground into the snow to be removed, and a movable handle which mays be rotated to position to either push or pull the scoop into the snow.

CN106812106 A discloses a sliding dustpan with a backflow blocking plate.

RU 177240 U1 discloses a trolley for transportation of vibrating plates, comprising an axle with running wheels with a load-carrying platform fixed on it with side, front, folding rear sides, a support bar fixed under the trailing edge of the platform, removable brackets fixing the vibrating plate in the transport position, and a handle with an emphasis mounted on it, characterized in that it is additionally provided with a swivel frame and its rotation limiter, wherein one end of the frame is pivotally connected to the axis of the running wheels under the platform bottom, its second end is pivotally fixed to the support platform, and the frame rotation limiter is installed under the platform bottom.

### BRIEF DESCRIPTION OF THE FIGURES

Fig. 1 shows the relocation device according to an exemplary embodiment of the invention, viewed from one side.
Fig. 2 shows the relocation device according to an exemplary embodiment of the invention, viewed from one end.
Fig. 3 shows the relocation device according to an exemplary embodiment of the invention, viewed from above, with the handle set to a position for relocation towards the user according to the invention.
Fig. 4 shows the relocation device according to an exemplary embodiment of the invention, viewed from above, with the handle set to a shovel position and a position for relocation away from the user according to the invention.
Fig. 5 shows the relocation device according to an exemplary embodiment of the invention, wherein the handle is able to turn in a stepless manner with respect to an axis thereof.
Fig. 6 shows an implementation according to an exemplary embodiment of the invention, wherein the handle is set to a storage position.
Fig. 7 shows an implementation of the flap structure according to an exemplary embodiment of the invention.
Fig. 8 shows an implementation of the flap structure according to an exemplary embodiment of the invention.

### DETAILED DESCRIPTION OF THE INVENTION

The development of the reversible shovel began with practical need and the situation, which has often occurred in the winter, in which a passenger car becomes stuck in snow which has accumulated on a road after a heavy fall of snow. In such a situation, the driving wheels lose their grip on the road, and the car becomes stuck in the snow which has become packed mainly in front of the wheels and beneath the car. The same situation may occur in some cases in summer conditions too, when there may be sand, mud or a similar ground type instead of snow. Due to the confined space beneath the car, it is generally not possible to get out of this situation using conventional snow handling implements, such as snow shovels and other types of shovel. In this case, by using the pull shovel disclosed in the present patent application and included in the reversible shovel for example, it is possible to remove snow from beneath the car by pulling it away in the scoop of the pull shovel. Alternatively, the solution according to the invention, included in the reversible shovel, may be used for the removal of materials, to move materials away from a user with back and forth movement. This solution brings more possibilities for getting out of cramped and difficult situations with a single implement. The relocation device may also be used for example for traditional snow shovelling in a yard, or in a similar developed and efficient manner.

In an implementation according to the invention, the flap structure may be set to a desired position thereof according to the movement direction in backward relocation, in such a way that the flap structure guides the materials to be relocated onto the relocation base in the first movement (forwards), and the flap structure holds the materials to be relocated on the relocation base in a backward relocating movement. When switching from the relocating movement to the first movement, the materials are able to leave the relocation base. In another implementation according to the invention, the flap structure may be set to a desired position thereof according to the movement direction in forward relocation, in such a way that the flap structure guides the materials to be relocated onto the relocation base in the first movement (backwards), and the flap structure holds the materials to be relocated on the relocation base in a forward relocating movement. When switching from the relocating movement to the first movement, the materials are able to leave the relocation base. In both implementations, the relocation structure loosens and guides the materials onto the relocation base in the first movement and makes it easier for the materials to leave at the end of the relocating movement, by preventing them from becoming stuck by virtue of the turning structure. The relocation structure may be fastenable at different points of the relocation base.

The removal of snow or ground material from difficult and confined spaces, e.g. from beneath a car, can be carried out using the reversible shovel's characteristics of relocation towards the user, i.e. backwards, and away from the user, i.e. forwards. An implement which operates in different directions may be transformed quickly from the reversible shovel using convenient quick locks 1 and 8 and by turning the handle around joint pegs 5 thereof, and this implement may be used like a normal shovel as needed, for example to shovel snow from a vehicle's surroundings.

The material relocation device according to the invention for the relocation of materials comprises a material relocation base 2. The material relocation device comprises a material relocation structure 20 connected to the relocation base 2, for forward relocation of materials and backward relocation of materials. The materials to be relocated may be for example snow, ice, sand or other ground material, or a mixture of these. The relocation structure 20 may comprise a turning flap structure 4, to be turned according to a movement direction of material relocation. The material relocation device may comprise means 6 for turning the flap structure, and a counter-structure 7 for setting the flap structure 4 to a desired position thereof. In exemplary embodiments of the invention, the relocation device may be for example a reversible shovel or pusher. In one embodiment of the invention, the relocation device may be connected to a motorized material relocation apparatus or vehicle, in which case it is also possible to carry out large-volume snow removal and material relocation required for large areas.

The relocation device may comprise a turnable handle 3, 9, to be turned to a different position according to a selected use. The turning flap structure 4 may be arranged to open when the relocation device is moved forwards to relocate the materials to be relocated onto the relocation base 2, and correspondingly, the flap structure 4 may be arranged to close when moved backwards, holding the materials to be relocated on the relocation base 2. The turning flap structure 4 may be arranged to open when the relocation device is moved backwards to relocate the materials to be relocated onto the relocation base 2, and correspondingly, the turning flap structure 4 may be arranged to close when the relocation device is moved forwards, holding the materials to be relocated on the relocation base 2.

The invention may be used for example for the removal of snow from in front of the wheels of a passenger car, from the sides thereof and from beneath the bottom thereof, in situations in which the car has become stuck on a road covered with a large amount of snow. Fine sand, mud or a similar material is also a possibility in the summer. Such a situation may be encountered in the winter for example after a heavy fall of snow on inadequately maintained roads, which often have not been ploughed quickly enough. In the situation mentioned, a vehicle, in most cases a passenger car, may become stuck, and the removal of snow, etc. which has become packed in front of the wheels and beneath the bottom is difficult or even impossible using existing conventional devices (common shovels, snow drivers, etc.), and it may even be necessary to call a recovery vehicle to free the car from its predicament.

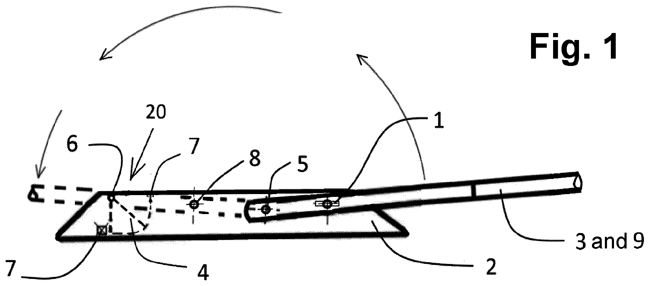

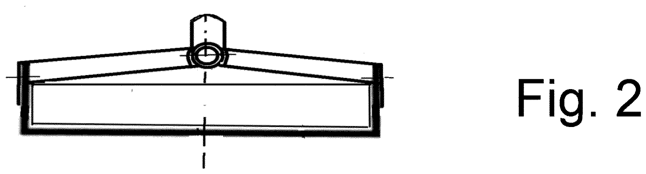

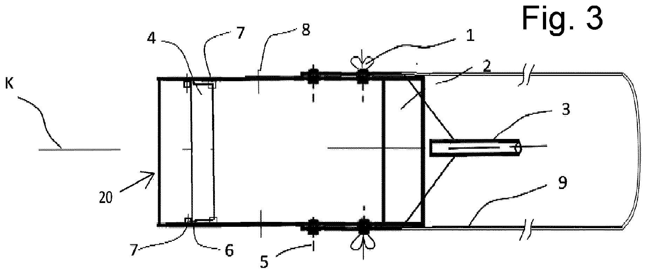

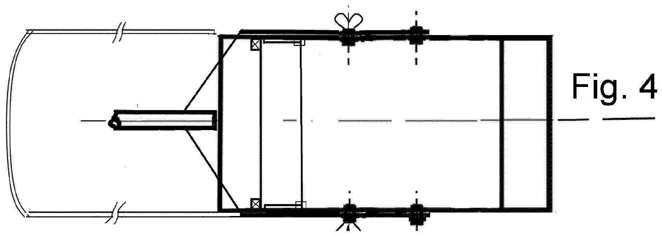

Embodiments of the invention are presented below with reference to figs. 1 - 8. Identical reference numerals are used for identical or similar structures and parts, but the designations may differ from those used in the claims and elsewhere in the specification, depending on the application in question. Fig. 1 shows the invention in its assembled state, as a backward-relocating pull shovel, viewed from one side. Fig. 2 shows the invention viewed from one end. Fig. 3 shows the backward-relocating pull shovel of the invention, viewed from above. In fig. 4, the handle is set to a forward-relocating shovel position, conventionally and according to the invention. The main parts of the reversible shovel are a body or scoop 2 serving as a relocation base, a double-acting turning handle 3 or 9, handle quick locks 1 and 8, and a turning valve 4.

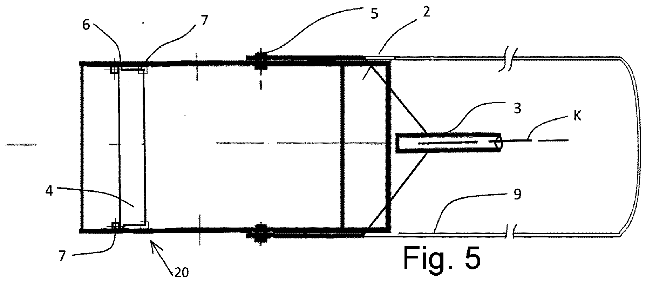

In one embodiment of the invention, the apparatus may act as a pull shovel (figs. 1 and 3), and also as a forward-relocating, conventional shovel using the relocation structure 20 (fig. 4). In addition, the apparatus may act in a stepless manner as a pulling and forward-relocating apparatus and also as a conventional shovel by removing the quick locks (fig. 5) from use.

Snow/ground material which has become packed in front of the wheels of a vehicle and especially beneath the bottom thereof is removed using the reversible shovel in such a way that the shovel is first set to a pull shovel position using the quick locks 1 (figs. 1 and 3). The pull shovel is moved back and forth, with pulling-pushing movements, into the snow which has become packed beneath the vehicle, from the sides of the vehicle. At this time, in a pushing stage (first movement), the flap 4 opens, under the action of the materials to be relocated, against counter-pegs thereof used as the counter-structure 7 and/or, in an exemplary embodiment, against a spring force placed in connection with the means 6, and snow is pushed into the scoop of the pull shovel and even through the scoop. The body 2 of the relocation device or apparatus, having a central axis K, comprises a shovel-like scoop. The scoop 2 is designed to fit underneath a modern passenger car with a low floor, amongst other things. As the shovel is pulled out (relocating movement) from beneath the bottom of the car, the flap 4 in the relocation structure 20 moves into a closed position against the counter-pegs thereof used as the counter-structure 7 and/or against the relocation base 2, being acted upon by the snow, etc. which has been pushed into the scoop and by a return spring 6. At this time, with the flap being closed, the material does not leave the shovel scoop as this is pulled away, and snow for example is moved from beneath the car in the scoop of the apparatus or relocation device, as the handle is pulled towards the user.

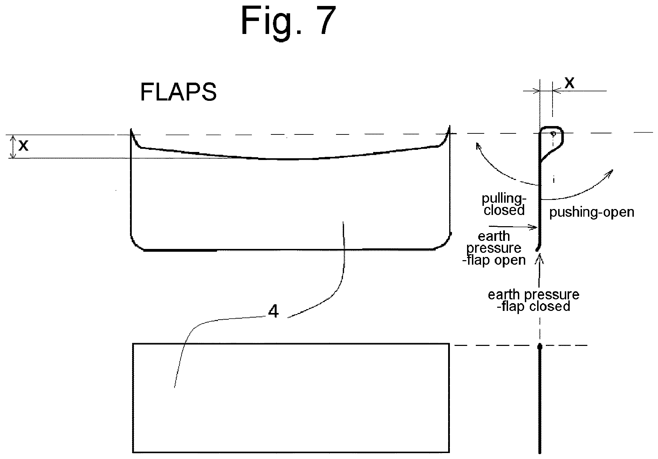

Alternatively, as the situation and conditions demand, the handle of the shovel may be turned so as to be consistent with a more conventional relocation direction (fig. 4) and locked with the quick locks 8 (fig. 3). The "pulling" and "pushing" mentioned in the forward-relocating device (fig. 7) vary according to the movement direction, i.e. "pulling-open" and "pushing-closed". Now, when the shovel is pulled towards the user (first movement), the spring-return flap 4 opens under the action of materials, with movement being limited by the counter-pegs used as the counter-structure 7, by the spring force 6 or by a combination of these, and allows the materials into the scoop 2 of the shovel. Next, the shovel is moved by pushing away from the user (relocating movement), at which time the flap 4 located in the relocation structure 20 closes against the counter-structure 7, the relocation base 2 or a combination of these, being acted upon by the materials which have been pushed into the scoop and by return springs 6. Thus materials can be relocated for example from in front of wheels or if necessary also from beneath a vehicle, by pushing away from the user in a novel and efficient manner. Moreover, the shape of the handle is designed in such a way that it allows materials such as snow into the scoop or relocation base 2 in a pulling movement, and off the relocation base when materials are being relocated towards the user. When switching from the relocating movement to the first movement, the materials such as snow leave the scoop of the relocation device freely, and the first movement is continued, directing the relocation device towards new materials which are to be relocated next, in order to take these into the scoop or relocation base 2. By repeating movement enough times - relocating movement, first movement, and so on - snow etc. which has become packed in front of the wheels and beneath the vehicle is removed, and the vehicle is enabled to move. In this way, it is possible to carry out the relocation of materials with back-and-forth movement of the implement, without unnecessary lifting or twisting movements, in a manner which saves the energy of the user (or of machine power).

In addition to the characteristics mentioned above, the reversible shovel may be used like a conventional shovel as required (fig. 4). In this case, the flap 4 located in the relocation structure 20 is in a closed position, for example with the aid of a spring force, being locked by the turning handle, closing as in the relocating movement or being locked in another manner, and acting like the rear edge of the scoop of a conventional device, preventing materials from sliding off as relocation is carried out. The flap 4 located in the relocation structure 20 is designed advantageously with regard to the fastening thereof too, and the means 6 are designed such that the relocation base 2 has as little unevenness as possible that would hinder the relocation of materials. Fastening also takes into account the smooth operation of the flap 4 in low and confined places without becoming wedged or caught in the bottom of a car for example, as the flap turns towards the bottom of the relocation base in the relocating movement in order to hold materials on the relocation base. In addition, the handle 3 or 9 of the reversible shovel may be left to turn freely in such a way that the quick locks 1 and 8 are not used, or are removed from the apparatus entirely (fig. 5). Thus the handle of the apparatus is able to turn in a stepless manner with respect to an axis 5 thereof. With the stepless function of the handle, it is possible to use characteristics of relocation in different directions, including the function of a conventional implement. In some implementations, free movement of the handle 3 or 9 may also be limited to only partially free movement, e.g. by means of counter-structures located on the handle 3 or 9, on the relocation base 2, or on both of these; in this case, the operational possibilities thereof are diversified, and the user can for example continue the relocation of materials by lifting on the relocation device, with the relocation base remaining under control, also in the case where this is lifted clear of the surface of the road for example.

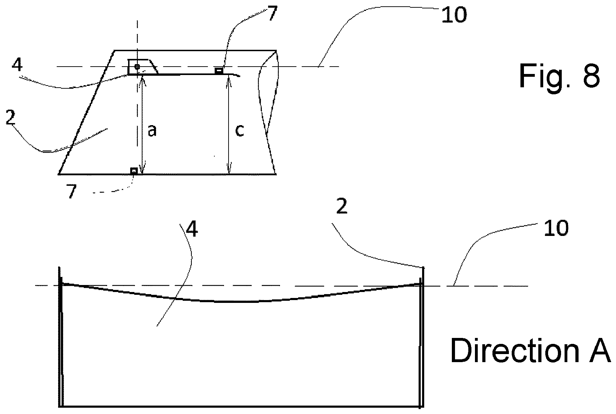

The role of a (counter-)structure limiting the movement of the flap 4 may be played by the scoop or relocation base 2 when the flap is closing, and by the spring force located in connection with the means 6 when the flap is opening, either alone or together with the separate counter-structure 7. The spring force which assists the closing of the flap 4 and restricts the opening thereof may also be located separately from the means 6, depending on the embodiment, or the spring force is not required at all in all embodiments. The counter-structure 7 may be located at different points in the relocation structure depending on the embodiment, also in connection with the means 6, or is not needed in some embodiments, in which case the relocation base 2 and/or the spring force limits movement of the flap 4 in a corresponding manner. Moreover, the handle 3 or 9 of the relocation device may act as a structure which limits and guides the movement of the flap 4, depending on the position and operation thereof consistent with implementation in relation to the relocation structure. In some implementations of the relocation structure, the opening of the flap 4 does not need to be limited with a separate counter-structure; the required closure-assisting operation is accomplished through the placement of the means 6 in relation to the flap (figs. 7 and 8). It is also possible for a corresponding operation to be realized by gravity, especially in relocation devices in a larger size category and machine-operated relocation devices. The size of the relocation device to be constructed and the nature of the materials to be relocated determine the final embodiment of the relocation structure.

The turnable handle may be separate and connectable to the apparatus at different points and in different positions. The handle may be articulated or non-articulated, depending on the embodiment. The handle may be articulated with quick locking, immobile with quick locking, or completely fixed. In one embodiment of the invention, a cover may also be used to hold materials in the scoop 2, i.e. on top of the body. The cover may be articulated, fixed or quick-lockable. The cover could be webbed or solid. Depending on the embodiment, the cover may also be machine-operated. When the handle 3 or 9 is fixed or limited in movement, the relocation of materials in different directions or just one direction may be realized by changing the fastening of the relocation structure 20 in relation to the relocation base 2. With the relocation structure detached, the implement acts like a conventional implement.

The implement which performs relocation away from the user in fig. 4 is realized by turning the handle 3 or 9 around joints 5 thereof. In the apparatus according to fig. 5, the handle 3 or 9 turns in a stepless manner without locking means, operating in a versatile fashion in the relocation of materials in different directions. Part 9 shows an option for a handle, which might be needed when an apparatus larger than a conventional shovel, i.e. a pusher, is being constructed.

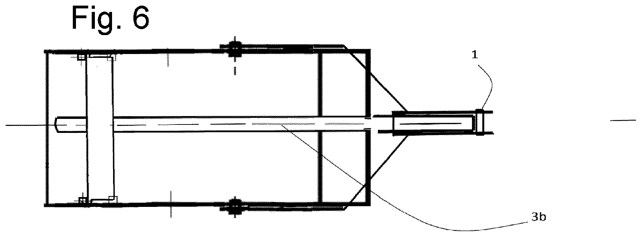

Fig. 6 shows the reversible shovel set to a storage position. At this time, a handle 3b thereof has been released from quick locking means 1 thereof and pushed into the scoop of the shovel. The handle 3b may also be realized so as to be telescopically adjustable. The reversible shovel transforms to a small size and fits comfortably into the boot of a passenger car for example. The handle 3b also enables the movement of materials with less energy from the user, being located close to the body/relocation base 2. The position of the handle 3b may be adjusted in comparison to the handle 3, taking appropriate working practice into account. The structure of the handles 3 and 3b enables materials to be relocated easily by the method according to the invention, allowing them to move without hindrance onto the relocation base and off the relocation base, while keeping the user's grip as close as possible to the centre of gravity of the materials to be relocated, in which case a smaller force is required to lift them for example.

The flap 4 of the reversible shovel may be shaped such that the shape and geometry thereof guide the operation thereof in accordance with back-and-forth pulling-pushing movements, under the action of ground materials together with the spring force or without it (figs. 7 and 8). Direction A in fig. 8 signifies that the lower diagram and the upper diagram in fig. 8 are viewed from different directions. Fig. 7 also has different viewing directions. The "pulling" and "pushing" mentioned in the forward-relocating device (fig. 7) vary according to the movement direction, i.e. "pulling-open" and "pushing-closed".

The shape of the flap supports the durability and operation thereof, by guiding the pressure of ground materials so as to move it in a desired direction, by guiding the pressure of ground materials to below axis/joint 10 (fig. 8, direction A) partially or completely as the flap opens (first movement), creating a torsional force as shown by length x (fig. 7) for moving the flap from pressure directed at an upper edge thereof too, while reducing the stress directed at it (curved upper edge of the flap). The shaped upper edge of the flap in the open position supports the operation and durability thereof. The curved shape reduces perpendicular stress from ground materials that is directed at the upper edge of the flap 4, and enables it to penetrate/cut through materials better.

As the flap 4 begins to close, length c (the extremity of the flap) is at most the same as length a, and/or the extremity of the flap (opposite the upper edge/joint, against the body 2 or the bottom of the scoop in the closed position) is located below axis 10 (fig. 8). In the relocating movement, the pressure of materials thus causes a torsional force which tends to close the flap, as shown by length x (fig. 7), as soon as pressure is directed at the extremity of the flap. The flap 4 may be partially or entirely shaped, and also completely straight (figs. 7 and 8). The size and intended use of the apparatus determine the flap type.

When the handle 3 or 9 of the reversible shovel is turned and fastened in different positions with quick locking means, an implement is created which may be used for the efficient relocation of materials towards the user and away from the user. In addition, the tool may be used in the manner of conventional implements like pushers, etc., depending on the size and embodiment of the apparatus. It is also possible for these different ways of relocating materials to be carried out with the handle in a stepless setting or in a setting that is stepless to a limited extent, including operation of a conventional shovel, pusher, etc. Instead of snow, the reversible shovel is also suitable for the handling and relocation of other materials such as mud, sand and other similar materials. These multifaceted characteristics may also be realized as separate products, for example as a device which is forward-relocating (with relocation structure + conventional) or which performs relocation (backwards with relocation structure + forwards conventionally) and also apparatuses for use on larger machines.

In another embodiment of the invention, the flap 4 may also be articulated to the bottom or sides of the relocation device. The flap may also have a greater number of parts. In one embodiment of the invention, the flap may be moved with an external force by sliding, for example in the manner of a sliding door. In embodiments of the invention, for example in motorized embodiments, the movement path of the flap may be varied to have different sizes, and even to be a movement path of a full 360 degrees. When the means 6 for articulation of the flap 4 are located in an upper edge of the relocation base 2, a strong support/blade structure which aids the loosening and cutting of materials to be relocated may be installed in front of it, to facilitate the relocation of hard materials and the operation of the flap in the first movement. The structure in question may be a fixed part of the relocation base, or for example detachable and replaceable, and the means 6 may also be disposed on the structure in question. This blade/reinforcement also significantly reduces the stresses directed at the upper edge of the flap 4 when it is starting to open and also when the flap is open. The structure likewise makes it possible for the means 6 to be placed in a site that is able to withstand stresses very well. The same blade/support structure may also act as a counter-structure which limits movement of the flap 4 when it is closing, if a movement of the flap 4 in which it closes upwards from the bottom of the relocation base in the relocating movement is used in some embodiment of the relocation device through the placement of the means 6 in a lower part of the relocation base 2.

Moreover, point/blade parts, used for loosening materials and located at the side of the relocation structure of the relocation base and opposite the relocation structure may function in different ways, e.g. one being more capable of cutting into hard materials such as ice, and they may also be replaceable blades that are connectable to the relocation base.

In another embodiment of the invention, the flap, the fastening of the handle, and the angle of the entire relocation base (scoop) in relation to the handle, i.e. all functions, may be moved by machine power. Moreover, the quick locking and detachability of the handle may be arranged as needed. The handle may be fixed in the machine, and the apparatus may be turned to a required operating direction by opening the locking means. For example, in tractors, hydraulic quick locks may be present beside the bucket, precisely for the quick changing of tools, buckets, etc. Mechanized operation of the flap also enables it to have different movement tracks. The opening and closing of the flap may also be realized in a purely motorized fashion.

In one embodiment of the invention, the flap may be locked in a normal function. When the handle comes close to the flap, locking may be performed; this ensures the firmness and operation of the structure.

Fixed or detachable wheels may be connected to the relocation device according to one embodiment of the invention.

## Claims

1. Material relocation device for relocation of materials, the material relocation device comprising a relocation base (2) comprising two opposite open ends and two side walls, and a material relocation structure (20) connected to the relocation base (2) for the relocation of materials towards a user and away from the user, the relocation structure (20) comprising a turning flap structure (4), to be turned according to a movement direction of material relocation, the material relocation device further comprising means (6) for turning the flap structure, and a counter-structure (7) for setting the flap structure (4) to a desired position thereof, in such a way that in a first movement direction the flap structure (4) turns open for allowing the materials onto the relocation base through one of the opposite open ends, and in a second relocation direction the flap structure (4) is closed for holding the materials on the relocation base (2) and for allowing release of the material through another one of the two open ends of the relocation base (2), **characterized in that** the device comprises a turnable handle (3,9) to be turned to a different position according to the selected use, wherein the turnable handle is attached to the two side walls for pushing and pulling the device.

2. Material relocation device according to Claim 1, **characterized in that** the material relocation device is adapted for the relocation of at least one of the materials snow, ice, sand, and other ground material.

3. Material relocation device according to Claim 1, **characterized in that** the relocation device is a reversible shovel.

4. Material relocation device according to Claim 1, **characterized in that** the relocation device is a pusher.

5. Material relocation device according to Claim 1, **characterized in that** the relocation structure comprises the turning flap structure (4), which is arranged to open in a first movement of the relocation device in order to relocate the materials to be relocated onto the relocation base (2), the flap structure (4) also being arranged to close in a second relocating movement and hold the materials to be relocated on the relocation base (2).

6. System comprising material relocation device according to Claim 1, and a motorized material relocation apparatus or vehicle.

## Patentansprüche

1. Materialumlagerungsvorrichtung zum Umlagern von Materialien, wobei die Materialumlagerungsvorrichtung eine Umlagerungsbasis (2) mit zwei gegenüberliegenden offenen Enden und zwei Seitenwänden sowie eine mit der Umlagerungsbasis (2) verbundene Materialumlagerungsstruktur (20) für die Umlagerung von Materialien hin zu einem Benutzer und von dem Benutzer weg umfasst, wobei die Umlagerungsstruktur (20) eine Drehklappenstruktur (4) umfasst, die entsprechend einer Bewegungsrichtung der Materialumlagerung gedreht werden kann, wobei die Materialumlagerungsvorrichtung ferner Mittel (6) zum Drehen der Klappenstruktur und eine Gegenstruktur (7) zum Einstellen der Klappenstruktur (4) in eine gewünschte Position derselben in der Art umfasst, dass sich die Klappenstruktur (4) in einer ersten Bewegungsrichtung auf offen dreht, um die Materialien durch eines der gegenüberliegenden offenen Enden auf die Umlagerungsbasis zu lassen, und dass in einer zweiten Umlagerungsrichtung die Klappenstruktur (4) geschlossen ist, um die Materialien auf der Umlagerungsbasis (2) zu halten und um die Freigabe des Materials durch das andere der beiden offenen Enden der Umlagerungsbasis (2) zu ermöglichen,
**dadurch gekennzeichnet, dass** die Vorrichtung einen drehbaren Handgriff (3, 9) aufweist, der je nach gewählter Verwendung in eine andere Position gedreht werden kann, wobei der drehbare Handgriff an den zwei Seitenwänden zum Schieben und Ziehen der Vorrichtung befestigt ist.

2. Materialumlagerungsvorrichtung nach Anspruch 1, **dadurch gekennzeichnet, dass** die Materialumlagerungsvorrichtung zur Umlagerung von wenigstens einem der Materialien, die Schnee, Eis, Sand und sonstiges Bodenmaterial umfassen, eingerichtet ist.

3. Materialumlagerungsvorrichtung nach Anspruch 1, **dadurch gekennzeichnet, dass** die Materialumlagerungsvorrichtung eine wendbare Schaufel ist.

4. Materialumlagerungsvorrichtung nach Anspruch 1, **dadurch gekennzeichnet, dass** die Umlagerungsvorrichtung ein Schieber ist.

5. Materialumlagerungsvorrichtung nach Anspruch 1, **dadurch gekennzeichnet, dass** die Umlagerungsstruktur die Wendeklappenstruktur (4) umfasst, die dazu eingerichtet ist, dass sie sich in einer ersten Bewegung der Umlagerungsvorrichtung öffnet, um die Materialien, die auf die Umlagerungsbasis (2) umgelagert werden sollen, umzulagern, wobei die Klappenstruktur (4) auch so angeordnet ist, dass sie sich in einer zweiten Umlagerungsbewegung schließt und die umzulagernden Materialien auf der Umlagerungsbasis (2) hält.

6. System, umfassend eine Materialumlagerungsvorrichtung nach Anspruch 1 und eine motorisierte Materialumlagerungsvorrichtung oder ein motorisiertes Materialumlagerungsfahrzeug.

## Revendications

1. Dispositif de déplacement de matériaux pour déplacer des matériaux, le dispositif de déplacement de matériaux comprenant une base de déplacement (2) comprenant deux extrémités ouvertes opposées et deux parois latérales, et une structure de déplacement de matériaux (20) reliée à la base de déplacement (2) pour le déplacement de matériaux en direction d'un utilisateur et à distance de l'utilisateur, la structure de déplacement (20) comprend une structure de volet tournant (4), destinée à être tournée selon une direction de mouvement de déplacement de matériaux, le dispositif de déplacement de matériaux comprenant en outre un moyen (6) pour tourner la structure de volet, et une contre-structure (7) pour régler la structure de volet (4) à une position souhaitée de celle-ci, de manière à ce que dans une première direction de mouvement, la structure de volet (4) tourne en s'ouvrant pour faire passer les matériaux sur la base de déplacement au travers de l'une des extrémités ouvertes opposées, et dans une seconde direction de déplacement, la structure de volet (4) est fermée pour maintenir les matériaux sur la base de déplacement (2) et pour faire passer les matériaux au travers d'une autre des deux extrémités ouvertes de la base de déplacement (2), **caractérisé en ce que** le dispositif comprend une poignée rotative (3, 9) destinée à être tournée dans une position différente selon l'utilisation sélectionnée, dans lequel la poignée rotative est fixée aux deux parois latérales pour pousser et tirer le dispositif.

2. Dispositif de déplacement de matériaux selon la revendication 1, **caractérisé en ce que** le dispositif de déplacement de matériaux est adapté pour le déplacement d'au moins de matériaux neige, glace, sable et autre matériaux de sol.

3. Dispositif de déplacement de matériaux selon la revendication 1, **caractérisé en ce que** le dispositif de déplacement est une pelle réversible.

4. Dispositif de déplacement de matériaux selon la revendication 1, **caractérisé en ce que** le dispositif de déplacement est un pousseur.

5. Dispositif de déplacement de matériaux selon la revendication 1, **caractérisé en ce que** la structure de déplacement comprend la structure de volet tournant (4) qui est agencée pour s'ouvrir dans un premier mouvement du dispositif de déplacement afin de déplacer les matériaux à déplacer sur la base de déplacement (2), la structure de volet (4) étant également agencée pour se fermer dans un second mouvement de déplacement et maintenir les matériaux à déplacer sur la base de déplacement (2).

6. Système comprenant un dispositif de déplacement de matériaux selon la revendication 1, et un appareil ou véhicule de déplacement de matériaux motorisé.
